Europäisches Patentamt

European Patent Office

Office européen des brevets

(11) Numéro de publication: **0 062 567**
**B1**

(12) **FASCICULE DE BREVET EUROPEEN**

(45) Date de publication du fascicule du brevet:
**23.04.86**

(21) Numéro de dépôt: **82400538.3**

(22) Date de dépôt: **24.03.82**

(51) Int. Cl.⁴: **F 16 D 65/56**

(54) **Frein à disque de véhicule.**

(30) Priorité: **31.03.81 FR 8106465**

(43) Date de publication de la demande:
**13.10.82 Bulletin 82/41**

(45) Mention de la délivrance du brevet:
**23.04.86 Bulletin 86/17**

(84) Etats contractants désignés:
**DE GB IT**

(56) Documents cités:
**DE - A - 1 475 399**
**FR - A - 1 319 419**
**FR - A - 2 066 653**
**FR - A - 2 277 275**
**FR - A - 2 385 949**
**FR - A - 2 419 434**
**US - A - 4 014 414**
**US - A - 4 246 985**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Dalle, René, 65, Avenue Paul Vaillant-Couturier, F-94250 Gentilly (FR)**

(74) Mandataire: **Michardière, Bernard et al, Cabinet Plasseraud 84, rue d'Amsterdam, F-75009 Paris (FR)**

ACTORUM AG

**Description**

L'invention concerne un frein à disque de véhicule, notamment automobile, du type comprenant: un étrier monté à cheval sur le disque de part et d'autre duquel sont disposées des garnitures de friction susceptibles d'être appliquées contre lui par au moins un piston creux monté coulissant dans un cylindre solidaire de l'étrier, soit sous l'action d'une pression hydraulique qui s'établit dans le cylindre, soit sous l'action d'une commande mécanique manuelle; un mécanisme de rattrapage automatique du jeu provoqué par l'usure des garnitures de friction, disposé à l'intérieur du piston et comprenant une douille taraudée engagée sur une tige filetée et susceptible d'être entraînée par le piston, une rondelle étant prévue sur le piston pour assurer l'entraînement en translation de la douille taraudée et déterminant entre elle-même et le fond de l'intérieur du piston une chambre; des moyens de mise en communication des deux espaces situés de part et d'autre de ladite rondelle, pour faciliter la purge de ladite chambre; et des moyens d'appui destinés à être placé à l'intérieur du piston, de sorte que la douille taraudée vienne au contact de ces moyens d'appui lorsqu'elle est poussée par la tige filetée et entraîne le piston.

Un frein à disque de ce type général est déjà connu par le document FR-A-2 385 949. Dans le frein connu par ce document, une fente circulaire est prévue entre le bord intérieur de la rondelle 62 et la surface extérieure de l'écrou 54, fente dont le rôle n'est pas spécifié mais qui peut éventuellement être considérée comme pouvant servir à la purge de la chambre.

Toutefois, compte tenu de l'emplacement de cette fente circulaire et de ses dimensions, il ne peut être garanti qu'elle assure effectivement et dans tous les cas une purge efficace de la chambre.

Par ailleurs, dans le document cité plus haut, et compte tenu du fait que le piston 30 est souvent réalisé en un matériau tendre tel que l'aluminium, les contraintes importantes exercées sur le fond du piston par l'écrou 54 risquent, notamment lors de l'actionnement du frein de parc, de détériorer relativement rapidement cette zone du fond du piston, au niveau des surfaces d'appui.

Le but de la présente invention est de remédier à ces inconvénients.

Le but précité peut être atteint dans un frein à disque de véhicule du type général mentionné au début, d'une part en ce que lesdits moyens de mise en communication comprennent au moins une rainure axiale réalisée dans la paroi intérieure du piston et s'étendant axialement de part et d'autre de la rondelle, et d'autre part en ce que lesdits moyens d'appui sont formés par une pièce cylindrique dont une face est disposée contre le fond de l'intérieur du piston, tandis que l'autre face est destinée à venir en contact avec la douille taraudée, ladite pièce cylindrique présentant d'une part une ouverture centrale dans laquelle s'engage la tige filetée et d'autre part des rainures radiales débouchant dans des rainures additionnelles réalisées à la surface extérieure de la pièce cylindrique pour assurer une purge efficace du volume intérieur de cette pièce cylindrique.

De préférence, les moyens précités pour faciliter la purge de la chambre pourront comprendre deux rainures axiales diamétralement opposées.

Un mode d'exécution de l'invention va maintenant être décrit à titre d'exemple nullement limitatif avec référence aux figures du dessin annexé dans lequel:

La figure 1 est une coupe partielle, selon I–I, figure 2, d'un frein à disque équipé d'un piston selon un aspect partiel de l'invention. L'invention complète découle d'une combinaison des figures 1 à 4 d'une part et de la figure 5 d'autre part.

La figure 2 est une vue de gauche, par rapport à la figure 1, du piston.

La figure 3 est une vue, à plus grande échelle, suivant la flèche III, figure 1, d'une partie du piston.

La figure 4 est une coupe axiale d'une variante de réalisation du piston.

La figure 5, enfin, est une coupe axiale d'une réalisation du piston selon l'invention.

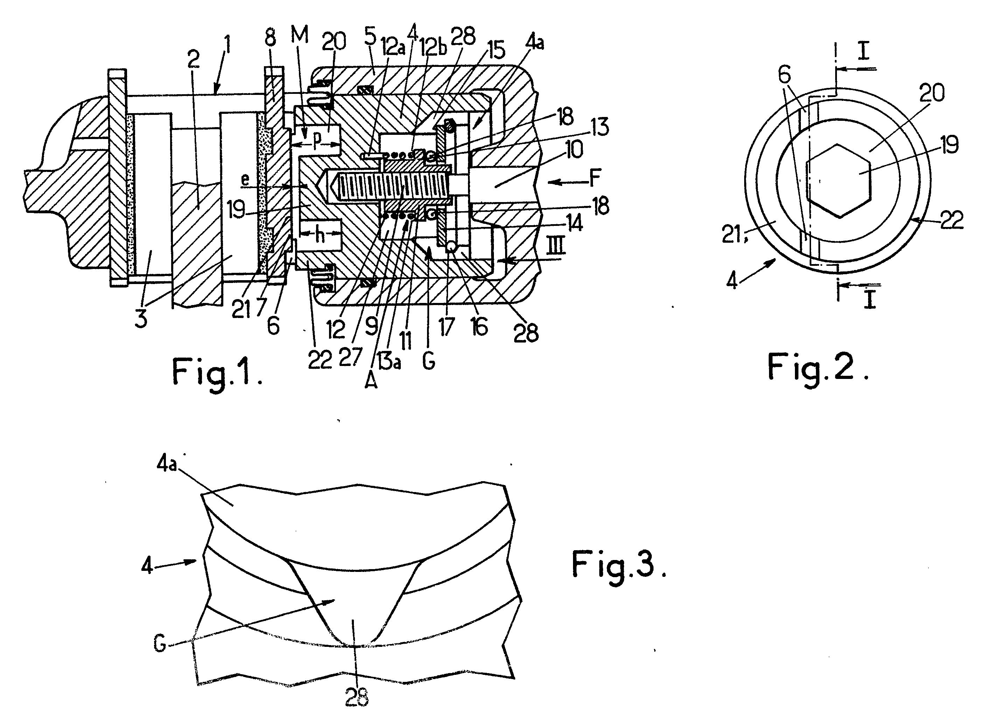

En se reportant à la figure 1 du dessin, on peut voir, partiellement représenté, un frein à disque de véhicule automobile comportant un étrier 1 monté à cheval sur un disque 2 de part et d'autre duquel sont disposées les garnitures de friction 3 susceptibles d'être appliquées contre le disque par au moins un piston creux 4, monté coulissant dans un cylindre 5 solidaire de l'étrier, soit sous l'action d'une pression hydraulique qui s'établit dans ce cylindre 5, soit sous l'action d'une commande mécanique manuelle du frein de parc.

Le piston 4 est arrêté en rotation par rapport à la garniture de friction grâce à une rainure 6 (fig. 1 et 2) prévue dans la face du piston voisine de la garniture, coopérant avec une nervure 7 réalisée sur le support de garniture 8.

Le frein à disque comporte également un mécanisme de rattrapage automatique du jeu provoqué par l'usure des garnitures de friction. Ce mécanisme est disposé dans le volume intérieur 4a du piston et comprend une tige filetée 9 arrêtée en rotation par rapport au cylindre 5. La tige filetée 9 est munie d'un prolongement 10 traversant un alésage prévu dans le fond du cylindre 5; les moyens d'arrêt en rotation (non visibles) de la tige 9 par rapport au cylindre 5 peuvent être prévus au niveau de ce prolongement 10 et être formés, par exemple, par un doigt d'arrêt en rotation, prévu sur le prolongement 10, propre à coulisser dans une rainure prévue dans le cylindre 5. La tige 9 et le prolongement 10 peuvent être déplacés en translation suivant la direction axiale lorsqu'une force F suffisante est exercée sur ce prolongement 10 par une commande mécanique manuelle (non représentée) de frein de parc. Cette force F doit être suffisante pour vaincre des moyens de rappel élastiques (non montrés) propres à maintenir la tige 9 dans la position reculée de la figure 1. Il convient de noter que le filetage de la tige 9 est un filetage dont le pas est grand par rapport au diamètre de la tige.

Une douille taraudée 11 est engagée sur la tige 9; cette douille, sous l'action d'un effort axial dirigé vers la garniture 3, peut se déplacer en translation par rapport à la tige 9, cette translation étant, naturellement, accompagnée d'un mouvement de rotation de la douille par rapport à la tige.

La douille taraudée 11 est liée en rotation au piston 4 par un accouplement unidirectionnel A permettant la rotation de la douille 11 par rapport au piston 4 et à la tige filetée 9, dans le sens qui correspond à un déplacement axial de la douille 11 vers le disque 2, et son arrêt en rotation dans l'autre sens. Ces moyens d'accouplement A sont constitués, par exemple, par un ressort 12 convenablement enroulé autour de la douille 11, ressort dont une extrémité 12a est ancrée dans le piston 4, tandis que l'autre extrémité 12b est libre en appui contre une face 13a d'un épaulement 13 de la douille 11.

Des moyens sont prévus pour assurer l'entraînement en translation de la douille 11 par le piston 4 lorsque ce dernier se déplace vers le disque 2. Ces moyens comprennent une rondelle 14 disposée entre un épaulement 15 du piston 4, et un jonc d'arrêt 16 logé dans une gorge 17 du piston 4. Une butée à billes 18 est placée entre l'épaulement 13 et la rondelle 14, du côté de l'épaulement opposé au ressort 12.

Le piston 4 comporte des moyens M accessibles de l'extérieur du frein, pour permettre l'entraînement en rotation du piston 4 de telle sorte que, lors du remplacement d'une garniture de friction 3 usée, il soit possible de faire tourner le piston dans le sens convenable pour l'écarter suffisamment du disque 2 et pour permettre l'insertion de la ou des garnitures neuves.

On comprend, en effet, que lorsqu'une garniture est usée, par suite du rattrapage automatique du jeu, le piston 4 s'est rapproché du disque 2. Après retrait de la garniture usée, l'espace existant entre le piston 4 et le disque 2 est insuffisant pour permettre d'insérer la garniture neuve dont l'épaisseur est supérieure à celle de la garniture usée.

La rotation du piston 4 dans le sens convenable provoque l'entraînement en rotation de la douille 11, laquelle, en coopérant avec les filets de la vis 9, se déplace en translation et entraîne le piston en l'éloignant du disque 2.

Il est donc possible, grâce aux moyens M de l'invention, de reculer le piston 4 lors d'un changement de garnitures de friction sans avoir à démonter la commande mécanique de frein de parc, qui agit sur le prolongement 10.

Les moyens M sont disposés sur la face du piston 4 tournée vers la garniture 3, ou, plus précisément, tournée vers le support 8 de cette garniture.

Lorsque le piston 4 est réalisé en un matériau relativement dur, notamment en acier, les moyens M peuvent être formés par une saillie 19 à contour polygonal, notamment hexagonal. On peut agir directement sur cette saillie 19 à l'aide d'une clef, lorsque la garniture usée 3 a été retirée.

La saillie 19 est disposée dans un logement creux dont la profondeur axiale p est supérieure à la longueur axiale h de la saillie de telle sorte que le piston 4 prenne appui contre le support 8 de garniture par l'extrémité frontale 21 (fig. 2) des parois 22 limitant le logement 20; un espace e (fig. 1) subsiste entre le support de garniture 8 et la saillie 19. Le contour extérieur des parois 22 peut être circulaire, comme représenté sur la figure 2.

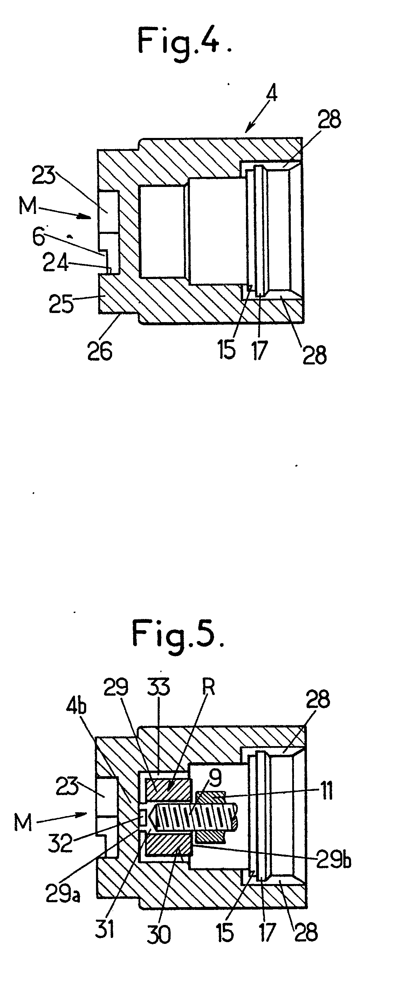

Selon une autre possibilité, avantageuse notamment lorsque le piston 4 (fig. 4 et 5) est réalisé en métal relativement tendre, en particulier en aluminium ou en alliage léger, les susdits moyens M sont constitués par un évidement 23 à contour polygonal, notamment hexagonal dans lequel est susceptible d'être engagée une pièce, par exemple un écrou, de forme complémentaire sur laquelle on peut agir au moyen d'une clef. Selon une variante, on peut agir directement sur cet évidement 23 à l'aide d'une clef adaptée à cet évidement. L'évidement 23, vu de gauche par rapport aux figures 4 et 5, présente donc un contour intérieur semblable au contour extérieur de la saillie 19 des figures 1 et 2.

Cet évidement 23 est limité par la surface intérieure 24 d'une paroi annulaire 25 dont la surface extérieure 26 a un contour circulaire. L'évidement 23, comme visible d'après les figures 4 et 5, est également prévu dans la face du piston 4 tournée vers le support de garniture 8.

Les parties des pistons 4, des figures 4 et 5, identiques ou jouant des rôles semblables à des parties déjà décrites pour les figures 1 et 2, sont désignées par les mêmes références numériques, sans que leur description soit reprise.

En se reportant de nouveau à la figure 1, on peut voir que la rondelle 14 détermine, entre elle-même et le fond de l'intérieur du piston 4, une chambre 27. Des moyens G sont prévus pour faciliter la purge de l'air de cette chambre et son remplissage complet par le liquide hydraulique du circuit de freinage. Ces moyens G comprennent, par exemple, deux rainures axiales 28 diamétralement opposées, prévues dans la paroi intérieure du piston 4 et s'étendant axialement de part et d'autre de la rondelle 14. Ces rainures axiales 28 établissent une communication efficace entre la chambre 27 et le volume du cylindre 5 situé à l'arrière du piston, et permettent d'éviter d'emprisonner de l'air, ce qui risquerait de provoquer un retard de freinage dans le cas d'une alimentation de liquide sous pression par doseur, ou un allongement de la course de la pédale de frein dans le cas d'une alimentation par un maître-cylindre classique.

Comme bien visible sur la figure 1, les rainures 28 s'étendent au-delà de l'épaulement 15 sur lequel prend appui la rondelle 14, vers le fond de la chambre 27, et au-delà de la gorge 17, vers le fond du cylindre 5.

La section transversale d'une rainure 28 peut avoir la forme d'un V, s'ouvrant vers l'intérieur du piston 4, comme visible sur la figure 3.

Les rainures 28 sont également visibles sur les pistons des figures 4 et 5.

Comme expliqué précédemment, la force F exercée par la commande manuelle du frein de parc est transmise par la tige filetée 9 (fig. 1) à la douille 11, laquelle vient prendre appui contre le fond du piston creux 4 et transmet à ce piston et aux garnitures 3 la force de serrage du disque 2.

Lorsque le piston 4 est réalisé en matériau tendre, tel que de l'aluminium, la zone du fond du piston 4 contre laquelle viendrait appuyer la rondelle 11, lors de l'actionnement du frein de parc, pourrait se détériorer relativement rapidement.

Pour remédier à cet inconvénient, comme montré sur la figure 5, on prévoit des moyens d'appui R destinés à être placés entre le fond intérieur 4b du piston et la douille taraudée 11 du dispositif de rattrapage de jeu de telle sorte que cette douille vienne au contact de ces moyens d'appui R lorsqu'elle est poussée par la tige filetée 9.

Ces moyens d'appui R sont formés par une pièce cylindrique 29 en forme de rondelle épaisse dont une face 29a est disposée contre le fond du piston, tandis que l'autre face 29b est destinée à venir en contact avec la douille taraudée 11. Cette pièce 29, par exemple réalisée en fer fritté ou en acier, est engagée dans un logement 30 prévu dans le piston, et dont le diamètre intérieur est égal au diamètre extérieur de la pièce. Cette pièce 29 présente une ouverture centrale 31 (ou alésage) dans laquelle peut s'engager l'extrémité de la tige filetée 9.

La surface d'appui entre la pièce 29 et le fond 4b du piston est supérieure à la surface d'appui entre cette pièce 29 et la douille 11, ce qui permet de réduire les contraintes sur le métal tendre au niveau des zones de contact.

La face 29a de la pièce 29 en appui contre le fond 4b comporte des rainures radiales 32, par exemple au nombre de quatre, réparties angulairement à 90°; ces rainures radiales 32 communiquant avec des rainures additionnelles axiales 33 réalisées sur la face cylindrique extérieure de la pièce 29. Ces rainures axiales 33 s'ouvrent vers le volume intérieur du piston 4.

L'ensemble des rainures 32 et 33 permet de réaliser une purge efficace du volume de l'alésage 31 lorsque la tige 9 est engagée dans cette ouverture.

Les moyens d'appui R permettent d'éviter une détérioration du piston 4 lors de son entraînement par la commande mécanique du frein de parc et lorsqu'il est réalisé en un matériau tendre.

## Revendications

1. Frein à disque de véhicule, notamment automobile, du type comprenant: un étrier (1) monté à cheval sur le disque (2) de part et d'autre duquel sont disposées des garnitures de friction (3) susceptibles d'être appliquées contre lui par au moins un piston creux (4) monté coulissant dans un cylindre (5) solidaire de l'étrier, soit sous l'action d'une pression hydraulique qui s'établit dans le cylindre, soit sous l'action d'une commande mécanique manuelle; un mécanisme de rattrapage automatique du jeu provoqué par l'usure des garnitures de friction, disposé à l'intérieur du piston et comprenant une douille taraudée (11) engagée sur une tige filetée (9) et susceptible d'être entraînée par le piston, une rondelle (14) étant prévue sur le piston pour assurer l'entraînement en translation de la douille taraudée (11) et déterminant entre elle-même et le fond de l'intérieur (46) du piston (4) une chambre (27); des moyens (G) de mise en communication des deux espaces situés de part et d'autre de ladite rondelle (14), pour faciliter la purge de ladite chambre (27); et des moyens d'appui (R) destinés à être placés à l'intérieur du piston (4), de sorte que la douille taraudée (11) vienne au contact de ces moyens d'appui (R) lorsqu'elle est poussée par la tige filetée (9) et entraîne le piston (4); caractérisé en ce que lesdits moyens de mise en communication (G) comprennent au moins une rainure axiale (28) réalisée dans la paroi intérieure du piston et s'étendant axialement de part et d'autre de la rondelle (14), et en ce que lesdits moyens d'appui (R) sont formés par une pièce cylindrique (29) dont une face (29a) est disposée contre le fond de l'intérieur (4b) du piston, tandis que l'autre face (29b) est destinée à venir en contact avec la douille taraudée (11), ladite pièce cylindrique (29) présentant d'une part une ouverture centrale (31) dans laquelle s'engage la tige filetée (9) et d'autre part des rainures radiales (32) débouchant dans des rainures additionnelles (33) réalisées à la surface extérieure de la pièce cylindrique (29) pour assurer une purge efficace du volume intérieur de cette pièce cylindrique (29).

2. Frein à disque selon la revendication 1, caractérisé en ce que les moyens (G), pour faciliter la purge de la chambre (27), comprennent deux rainures axiales (28) diamétralement opposées.

## Claims

1. A vehicle disc brake, more particularly a motor vehicle disc brake, of the type comprising a yoke (1) straddling the disc (2), on either side of which are provided frictio linings (3) adapted to be applied against it by at least one hollow piston (4) mounted to slide in a cylinder (5) connected to the yoke, either in response to a hydraulic pressure in the cylinder or in response to manual mechanical control; a mechanism for automatic take-up of the play produced by the wear of the friction linings, said mechanism being disposed inside the piston and comprising a tapped bush (11) fitted on a screwthreaded rod (9) and adapted to be driven by the piston, a washer (14) being provided on the piston to move the tapped bush (11) and defining a chamber (27) between itself and the end of the interior (4b) of the piston (4); means (G) for bringing into communication the two spaces situated on either side of said washer (14) to facilitate bleeding of said chamber (27); and support means (R) adapted to be disposed inside the piston (4) so that the tapped bush (11) may come into contact with said support means (R) when it is urged by the screwthreaded rod (9) and dirves the piston (4); characterised in that the said communication establishing means (G) comprise at least one axial slot (28) provided in the inner wall of the piston and extending axially on either side of the washer (14), and in that said support means (R) are in the form of a cylindrical member (29) one surface (29a) of which is disposed against the end of the interior (4b) of the piston while the other surface (29b) is adapted to come into contact with the tapped bush (11), the said cylindrical member (29) having, on the one hand, a central aperture (31) in which the screwthreaded rod (9) engages and, on the other hand, radial slots (32) leading into additional slots (33) in the outer surface of the cylindrical member (29) to provide effective bleeding of the internal volume of said cylindrical member (29).

2. A disc brake according to claim 1, characterised in that the means (G) for facilitating bleeding of the chamber (27) comprise two diametrically opposite axial slots (28).

**Patentansprüche**

1. Scheibenbremse für Fahrzeuge, insbesondere für Kraftfahrzeuge, mit einem Bügel (1), der rittlings über der Bremsscheibe (2) montiert ist, zu deren beiden Seiten sich Bremsbeläge (3) befinden, die gegen sie (2) von einem Kolben (4) andrückbar sind, der sowohl durch die Wirkung eines in dem Zylinder erzeugten hydraulischen Drucks als auch durch die Wirkung einer manuellen mechanischen Betätigung in einem mit den Bügel fest verbundenen Zylinder (5) gleitend bewegbar ist, mit einem im Innern des Kolbens angeordneten Mechanismus zum automatischen Ausgleichen des durch die Abnutzung der Bremsbeläge (3) hervorgerufenen Spiels, der eine mit einem Gewindestift (9) im Eingriff stehende und von dem Kolben antreibbare Gewindebuchse (11) sowie eine an dem Kolben vorgesehene Scheibe (14) umfasst, die ein Mitnehmen der Gewindebuchse (11) bei der Translationsbewegung des Kolbens ermöglicht und die zwischen sich und dem Boden des Innenraums (4b) des Kolbens (4) eine Kammer (27) begrenzt, mit Verbindungsmitteln (G), die die Räume zu beiden Seiten der Scheibe (14) zur Entlüftung der genannten Kammer (27) miteinander verbinden, sowie mit Stützmitteln (R), die im Innern des Kolbens (4) derart plazierbar sind, dass die Gewindebuchse (11) mit ihnen in Kontakt tritt, wenn sie unter der Stosswirkung des Gewindestifts (9) den Kolben (4) antreibt, dadurch gekennzeichnet, dass die genannten Verbindungsmittel (G) wenigstens eine in der Innenwand des Kolbens ausgebildete axiale Nut (28) umfassen, die sich axial zu beiden Seiten der Scheibe (14) ersteckt, und dass die genannten Stützmittel (R) von einem zylindrischen Teil (29) gebildet sind, dessen eine Seite (29a) an dem inneren Boden (4b) des Kolbens anliegt, während die andere Seite (29b) für den Kontakt mit der Gewindebuchse (11) bestimmt ist, wobei dieses zylindrische Teil (29) eine zentrale Öffnung (31) für den Eingriff des Gewindestifts (9) sowie radiale Nuten (32) besitzt, die in zusätzlichen Nuten (33) münden, welche an der Aussenfläche des zylindrischen Teils (29) ausgebildet sind und die eine wirksame Entlüftung des inneren Volumens dieses zylindrischen Teils (29) ermöglichen.

2. Scheibenbremse nach Anspruch 1, dadurch gekennzeichnet, dass die Verbindungsmittel (G) zur Erleichterung der Entlüftung der Kammer (27) zwei diametral einander gegenüberliegende axiale Nuten (28) umfassen.

Fig.1.

Fig.2.

Fig.3.

0 062 567

# Fig.4.

# Fig.5.